# EUROPEAN PATENT APPLICATION

(11) **EP 0 752 752 A1**
(43) Date of publication of application: **08.01.1997**
(21) Application number: 96830208.3
(22) Date of filing: 12.04.1996
(51) Int. Cl.: H02P 1/44

(54) **Changeover switching device for paralleling capacitors and, specifically, the start and und run capacitors of rotating-field asynchronous motors with single-phase power supply and intermittent duty cycle**

(30) Priority: 03.07.1995 IT BO950330
(71) Applicant: INCO MASSALOMBARDA SRL, 48024 Massa Lombarda (RA) (IT)
(72) Inventor: Geminiani, Fransesco, 48024 Massa Lombarda (RA) (IT); Benyahia, Zoubir, 48024 Massa Lombarda (RA) (IT)

(57) **Abstract**

A changeover switching device which effects the connection of a capacitor in parallel with another one (or more) already charged capacitor(s) and, subsequently, its disconnection and discharge onto a suitable resistor, avoiding the heavy charging and discharging impulse currents which usually damage such changeover switches.

It includes a choke coil (4), and exists in two versions: (a) an electromechanical version with a changeover switch (5) and a timing circuit (1); (b) an electronic version with a changeover switch (5) and a timing circuit (1, 6, 7, 8).

The figure shows its principal application in rotating-field asynchronous single-phase or three-phase motors, with single-phase supply (10), and having one or two main windings (11) and one auxiliary winding (12); to the auxiliary winding, a run capacitor (9) is permanently connected. The device of the invention changes over the start capacitor (2) from the parallel with the run capacitor (9) onto the discharge resistor (3) and viceversa. It is particularly suitable for fast intermittent duty cycles.

## Description

The object of the invention is a device which, by means of an electromechanical or an electronic changeover switch, effects the connection of a capacitor in parallel with another one (or more) already charged capacitor(s) and, subsequently, its disconnection and discharge onto a suitable resistor, while avoiding the heavy charging and discharging impulse currents which usually damage such switches.

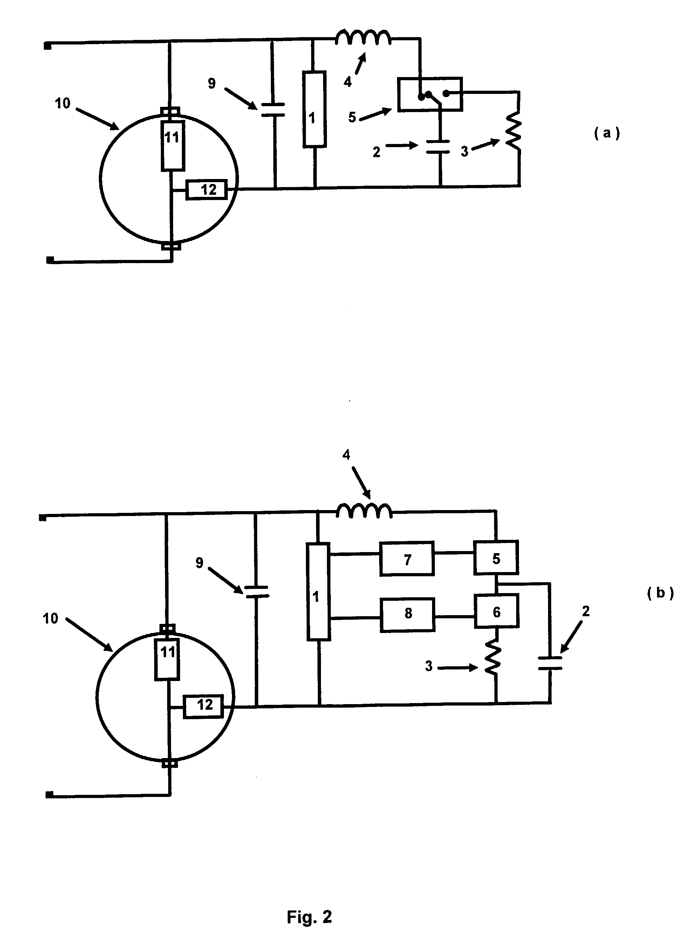

The main field of application of this device, though not the only one, is in rotating-field asynchronous motors, both single-phase and three-phase, energised from a single-phase mains (see Fig. 2). The stator of such motors comprises one or two main windings (11), and one auxiliary winding (12) to which a "motor run capacitor" (9), is permanently connected. A further "motor start capacitor" (2) is connected in parallel with this motor run capacitor for a brief period during the starting of the motor rotor (10) with the purpose of increasing the rotor's torque. After the rotor has reached a sufficient speed, the start capacitor is disconnected and discharged on to an appropriate resistor (3).

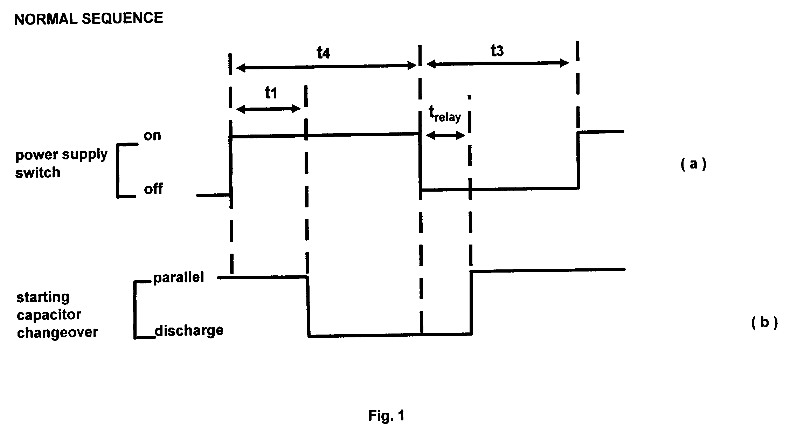

This situation is illustrated in both the diagrams of Fig. la showing the duty cycles of the motor, i.e. in the state of running (mains switch ON) and in the state of rest (mains switch OFF), and of Fig. 1b showing the connection and disconnection periods of the motor start capacitor.
- t1 is the start period when both the motor run capacitor (9) and the motor start capacitor (2) are in parallel; this period lasts generally from 0.2 to 2.0 seconds.
- t_{relay} is the time delay of the changeover switch, which can be in the order of 10 µs for the electronic type, and of 20 ms for the electromechanical type.
- t3 is the rest period of the motor (mains switch OFF).
- t4 is the operating period of the motor (mains switch ON).
- t3 + t4 is the overall duty cycle period.

For this sort of application, the present techniques employ many different devices based on centrifugal forces, current measurement, or simply a time delay; and all of these devices function more or less to satisfaction when the duty cycle is relatively long because, if such is the case, the capacitors are given time enough to discharge completely and, only a small current flows across the changeover switch while it is in operation.

When, however, the motor duty cycle is intermittent at a fast rate, as may occur in the operation of many industrial and domestic appliances such as lifts, floor cleaners, etc., the existing devices exhibit one or more of the following shortcomings which are described with reference to Figs. la and 1b and which the device of present invention succeeds in overcoming.
1. At each start of the motor by closing the mains switch, the changeover switch should be in such position that it makes sure the two capacitors are already in parallel, thus obtaining a maximum starting torque. After a period t1 deemed sufficient for the motor rotor to reach a sufficient speed, the changeover switch should disconnect the motor start capacitor - leaving it charged at the momentary instantaneous voltage - and should transfer it to a resistor onto which the capacitor can discharge its energy. The time required for the capacitor to discharge is a function of the capacitor's capacitance and of the resistor's resistance, and may be in the order of a few seconds.
   If the duty cycle is a fast one and the motor is disconnected suddenly, then the changeover switch must reinsert the motor start capacitor which is still partially charged, possibly with a voltage in opposition to that of the mains supply; this causes a strong current pulse to flow through the changeover switch, and thus possibly damaging the same.
   In addition, if, also because the motor duty cycle is a fast one, the mains switch closes again restarting the motor before the start capacitor had time to discharge, then the paralleling of the two capacitors does not take place and the starting torque may result inadequate.
2. Each time the motor is stopped by opening the mains switch, the motor run capacitor, then charged, discharges onto the motor's auxiliary winding to which it is connected; this takes place in a very short time due to the low resistance of the auxiliary winding. Now the changeover switch, by action of the device, should commutate from the resistor to the motor run capacitor, however with a time delay t_{relay} sufficient for the latter to be already discharged, and thus avoiding that it discharges onto the motor start capacitor causing the inrush of a strong current pulse through the changeover switch.
   In the case of a fast duty cycle, the mains switch may close again restarting the motor before the time t_{relay} has elapsed and, consequently, before the paralleling of the two capacitors could take place; and this will result in an inadequate starting torque.

By the invention, these shortcomings are overcome:
(a) mainly by introducing into the circuit a "choke coil" (4) exhibiting a low electrical resistance but a high impedance to current pulses; therefore, the peak value of such current pulses will be limited to a value not harmful to the changeover switch.
(b) in addition, due to the attenuated pulse currents, the duration period of the connection and disconnection of the motor start capacitor can be shortened by means of a pilot control and timing circuit which can be made in two different structures as described hereafter.
   The first structure (Fig. 2 a) includes a timing circuit (1) and an electromechanical switch (5); the second structure (Fig. 2 b) includes a timing circuit (1), an electronic switch (5), a solid-state relay of lesser capacity (6), two optoisolated pilot circuits (7) and (8).

Since the first structure is a simplified version of the second one, only the electronic version is illustrated and explained hereafter.

The timing circuit (1) consists of a resistor/capacitor module, and of a zener diode acting on the gate of a thyristor; by selecting the values of one or more of these components, it is possible to determine:
- the timing t1 of disconnection of the motor start capacitor,
- the timing t_{relay} of resetting of the relay and hence of paralleling the two capacitors.

The latter timing may be made sufficiently short thanks to the presence of the choke coil (4).

As can be appreciated, this choke coil performs a very important function and it represents a fundamental novelty with respect to the present state-of-the-art.

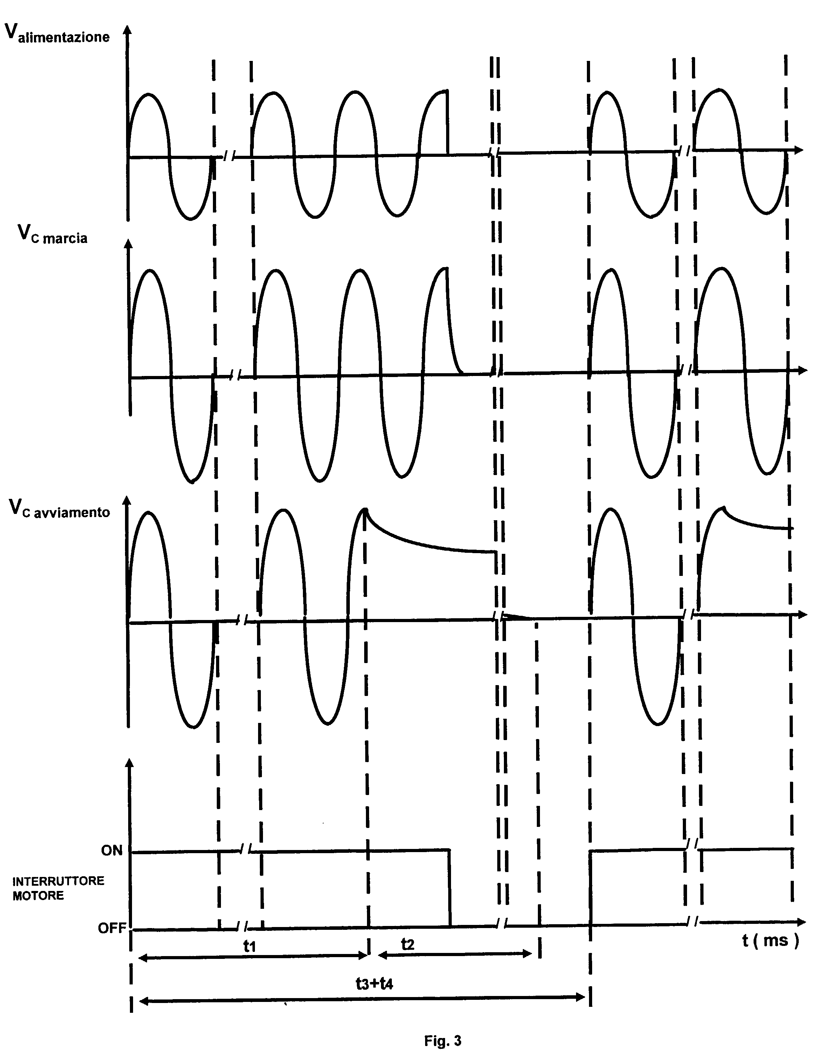

Using the device of the present invention, and for an intermittent duty cycle, the diagrams of Figs. 3, 4 and 5 show plots of the following voltages for various intermittent duty cycles:
(a) mains voltage,
(b) motor run capacitor voltage,
(c) motor start capacitor voltage.

Fig. 3 refers to a duration of operating time t4 (time ON) longer than the time of connection plus discharging of the motor start capacitor (t1 + t2).

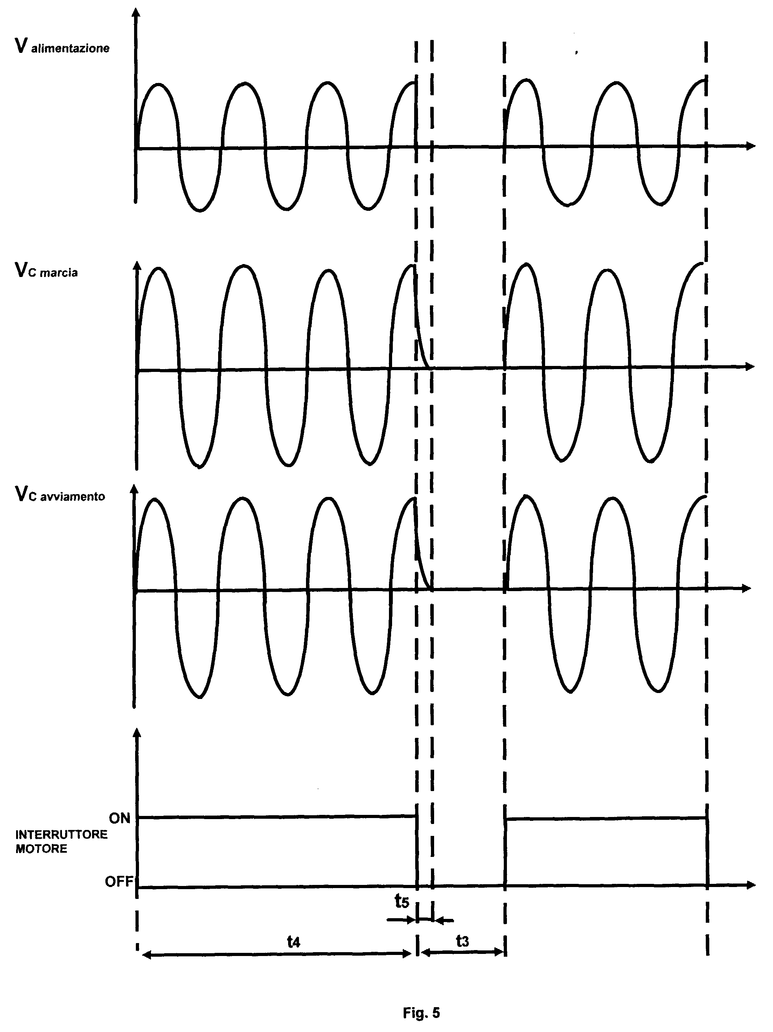

Fig. 5 refers to a duration of the duty cycle (t3 + t4) shorter than t1. In this case, the motor restarts with the start capacitor still connected. More precisely, when the energization time of the motor t4 (ON) is shorter than t1, the following will occur:
- (a) with the electromechanical device, the motor start capacitor remains energised; in the subsequent duty cycle the time of parallel connection with the motor run capacitor is shorter because the timer does not reset completely; however this is of little relevance to the performance of the motor.
- (b) In the electronic device the triac remains conductive as long as the optical coupler (7) is excited. This conductive state of the triac hastens the discharging of both the start and the run capacitors across the motor windings in case the motor be switched off when still in the starting phase. This discharging time is shown as t5 in Fig. 5.

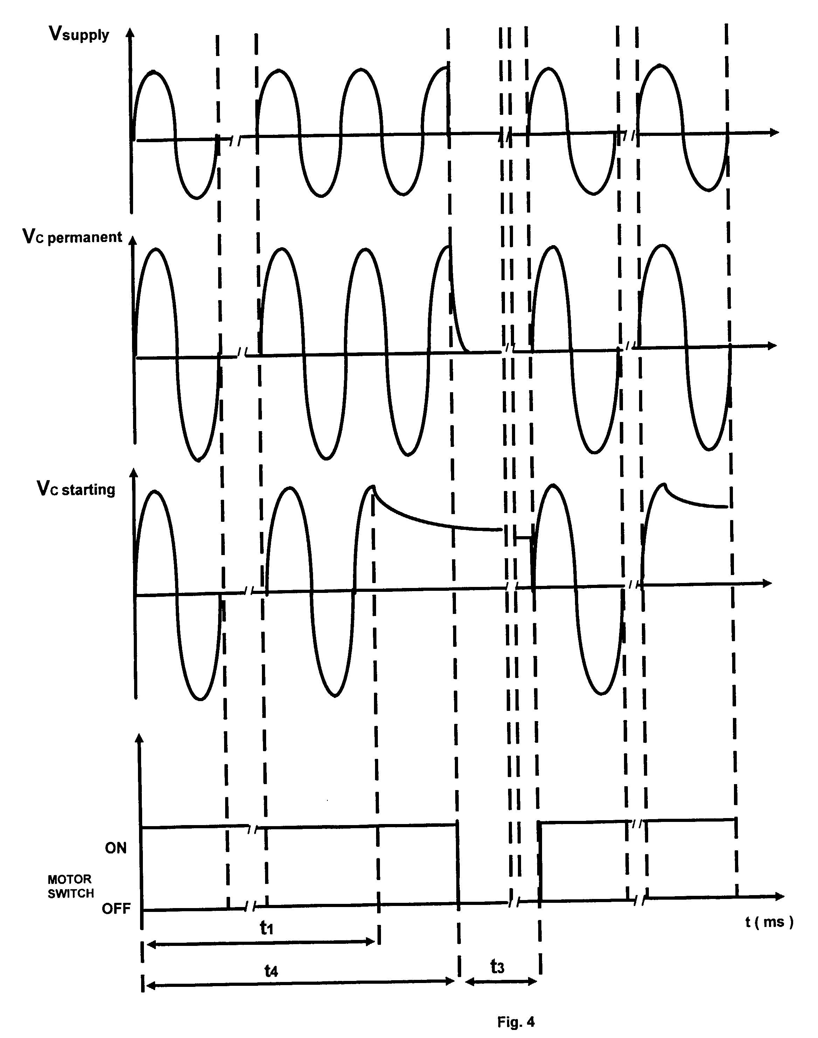

Fig. 4 refers to an operating time t4 longer than t1 but shorter than t1 + t2, i.e. ranging between the two above-described conditions. The motor starts again although the start capacitor is not yet fully discharged; the latter is, however, reconnected by the changeover switch and, thanks to the choke coil, the peak of the current is limited to a value which will not damage the components.

To demonstrate the application of the device of this invention, its electromechanical version has been used with a 0.37 kW single-phase asynchronous motor equipped with a 14 µF run capacitor and a 30 µF start capacitor. The choke coil had 8 µH inductance, the discharging resistor had 2.2 kΩ resistance and 20 W power. Repeated tests with duty cycles as fast as allowed by the fastest response time of commercially available relays, i.e. 10 to 20 ms, gave positive results after up to one million cycles.

In a second example of application, the electronic version of the device of this invention has been tested on a 4 kW three-phase asynchronous motor supplied with a single-phase voltage. The motor run capacitor was 200 µF, the start capacitor was 250 µF; the choke coil had 8 µH, the discharge resistor was of 0.6 kΩ, 160 W. Again, repeated tests for over a million cycles gave an entirely positive result.

Additional tests have shown that the device of this invention can be used, in its electromechanical version, with motor start capacitors of up to 100 µF capacitance; for higher values of capacitance the device in its electronic version should be used.

In any case, the device of the present invention has proved applicable with a large range of motor outputs, with capacitors of very high capacitance, and with the fastest duty cycles; even when used with motors which invert their rotational direction, no difficulties will occur.

## Claims

1. A device which, by means of an electromechanical or an electronic changeover switch, allows for the connection of a capacitor in parallel with one or more other(s) already energised, and then its disconnection and transfer onto a discharge resistor avoiding the strong charging and discharging pulse currents which could damage the switch; the characteristic feature of this invention is the introduction of a choke coil of low electrical resistance and high electrical impedance to pulse currents into the circuit connecting the capacitors, which allows for very fast cycles of connection and disconnection.

2. A device as described under 1. above, which can be used with rotating-field asynchronous motors, both single- and three-phase, supplied by a single-phase mains, for the connection of the motor start capacitor in parallel with the run capacitor and for its subsequent disconnection; the characteristic feature of this device being, in addition to that of a choke coil, an electronic changeover switch controlled by a timer which allows for a commutation regulated down to very short values so to be able to bring again to parallel the run and the start capacitors even when the motor duty cycle be fast, i.e. the ON/OFF frequency be high.
